(19) Europäisches Patentamt
European Patent Office
Office européen des brevets

(11) **EP 1 388 192 B1**

(12) **EUROPÄISCHE PATENTSCHRIFT**

(45) Veröffentlichungstag und Bekanntmachung des Hinweises auf die Patenterteilung:
**31.10.2012 Patentblatt 2012/44**

(21) Anmeldenummer: **02737811.6**

(22) Anmeldetag: **23.04.2002**

(51) Int Cl.:
*H02H 9/00* *(2006.01)*    *H02H 9/04* *(2006.01)*

(86) Internationale Anmeldenummer:
**PCT/DE2002/001479**

(87) Internationale Veröffentlichungsnummer:
**WO 2002/095895 (28.11.2002 Gazette 2002/48)**

(54) **LEISTUNGSBEGRENZUNGSSCHALTUNG**

POWER LIMITING CIRCUIT

CIRCUIT DE LIMITATION DE PUISSANCE

(84) Benannte Vertragsstaaten:
**DE FR GB IT**

(30) Priorität: **18.05.2001 DE 10124683**

(43) Veröffentlichungstag der Anmeldung:
**11.02.2004 Patentblatt 2004/07**

(73) Patentinhaber: **R. Stahl Schaltgeräte GmbH
74638 Waldenburg (DE)**

(72) Erfinder:
• **FREY, Fritz
74653 Künzelsau (DE)**

• **STRITZELBERGER, Jörg
74613 Öhringen-Cappel (DE)**

(74) Vertreter: **Rüger, Barthelt & Abel
Webergasse 3
73728 Esslingen (DE)**

(56) Entgegenhaltungen:
**US-A- 3 878 434    US-A- 4 831 484
US-A- 5 144 517**

EP 1 388 192 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Nach den Vorschriften des Explosionsschutzes spricht man von einem eigensicheren Verbraucher dann, wenn der Strom, den dieser Verbraucher maximal der Energiequelle entnehmen kann, einen bestimmten Grenzwert nicht übersteigen kann. Die Maximalwerte des Stroms und der Spannung hängen von den Umgebungsbedingungen ab. Der sich hieraus ergebende Maximalwert der Leistung ergibt sich zu 40,29 W bei 12,1 V und 3,33 A.

Die Vorschriften gehen davon aus, dass in dem eigensicheren Gerät Kurzschlussfehler auftreten können, die möglicherweise zu einer größeren Stromentnahme führen, womit das Gerät seine Eigenschaft als eigensicher verliert.

Damit ein solcher Betriebszustand auch bei einem Versagen von Bauteilen im Gerät nicht auftreten kann, fordern die Vorschriften in der Stromzuleitung einen Strombegrenzungswiderstand. An diesem Strombegrenzungswiderstand können im Kurzschlussfall bis zu 36 W Verlustleistung auftreten. Diese 36 W dürfen auf keinen Fall auf der Oberfläche des Widerstandes zu Temperaturen führen, die über 135□ C liegen. Damit die Temperaturbedingungen auch im ungünstigsten Falle eingehalten werden können, werden Schutzwiderstände mit großer Oberfläche und entsprechend großem Volumen benötigt. Auch das Gerätegehäuse muss in der Lage sein, die im Inneren maximal auftretende Verlustleistung von 36 W ohne unzulässige Erwärmung abzuleiten.

Es hat sich herausgestellt, dass bei der heutigen Miniaturisierung von Geräten dieser Schutzwiderstand zu einem wesentlichen Hemmnis für eine weitere Verkleinerung wird. Letztlich gibt der Widerstand aufgrund der geforderten maximalen Oberflächentemperatur das Volumen des Gehäuses vor.

Sinngemäß das gleiche gilt für einfache Sicherheitsbarrieren. Eine Sicherheitsbarriere ist eine Schutzschaltung, die zwangsweise dazu führt, dass die Leitungen, die von der Sicherheitsbarriere abgehen und in die gefährdete Zone laufen, keinen Strom und keine Spannung führen, die über die zulässigen Werte für eigensichere Stromkreise hinausgehen.

Die einfachste Art für solche Barrieren besteht in der Verwendung eines ohmschen Widerstands im Längszweig, der, wenn die Sicherheitsbarriere im gefährdeten Bereich angeordnet werden soll, die dieselben Bedingungen erfüllen muss, wie dies oben im Zusammenhang mit eigensicheren Geräten erläutert ist. Die Sicherheitsbarriere verfügt dabei zusätzlich üblicherweise noch über Schutzschaltungen, um Überspannungen zu vermeiden.

Die US 5,144,517 zeigt eine Sicherheitsbarriere, die im Anschluss an die Eingangsklemmen in einem Längszweig einen Relaiskontakt enthält, der manuell geschlossen wird und in soweit einen Ruhekontakt darstellt. Im Falle eines Überstroms wird die zugehörige Relaiswicklung mit Strom beaufschlagt, was zu einem Öffnen des Relaiskontaktes führt, der bis zum manuellen Rücksetzen im geöffneten Zustand verbleibt. Die Relaiswicklung liegt in Serie mit einem Thyristor, der aus einer Strommesseinrichtung angesteuert wird. Sowohl der Thyristor, als auch die Strommesseinrichtung liegen auf der Ausgangsseite der Sicherheitsbarriere.

Ausgehend hiervon ist es Aufgabe der Erfindung, eine Schaltung anzugeben, die es gestattet, einem mehrkanalige Sicherheitsbarriere aufzubauen.

Diese Aufgabe wird erfindungsgemäß durch die Schaltungsanordnung mit den Merkmalen des Anspruches 1 gelöst.

Die erfindungsgemäße Schaltungsanordnung lässt sich sowohl an der Stromversorgungsseite von eigensicheren Geräten verwenden als auch als eigenständig Sicherheitsbarriere. Darüber hinaus gestattet es die neue Schaltung eine "mehrkanalige" Sicherheitsbarriere aufzubauen. Hierzu wird die Shunteinrichtung lediglich einmal vorgesehen, während "ausgangsseitig" sich der Längszweig in entsprechend viele parallel geschaltete Längszweige gabelt oder aufteilt, wobei jedem Paar von so entstandenen weiteren Längszweigen, eine weitere Strommesseinrichtung zugeordnet ist. Hierdurch kann beispielsweise eine busschienenartige Stromversorgung geschaffen werden, die auf der Seite der Energiezufuhr eine Shunteinrichtung aufweist und von der beliebig viele Stromversorgungspfade zu den entsprechenden Geräten ab abgehen. Jeder Stromversorgungspfad enthält also seine eigene Strommesseinrichtung, wobei sämtliche Strommesseinrichtungen parallel geschaltet gemeinsam auf die eine Shunteinrichtung einwirken. Tritt nur in einer der StromversorcLungspfade eine gefährliche Bedingung auf, wird die Shunteinrichtung aktiviert und es werden sämtliche mitversorgte Strompfade abgeschaltet.

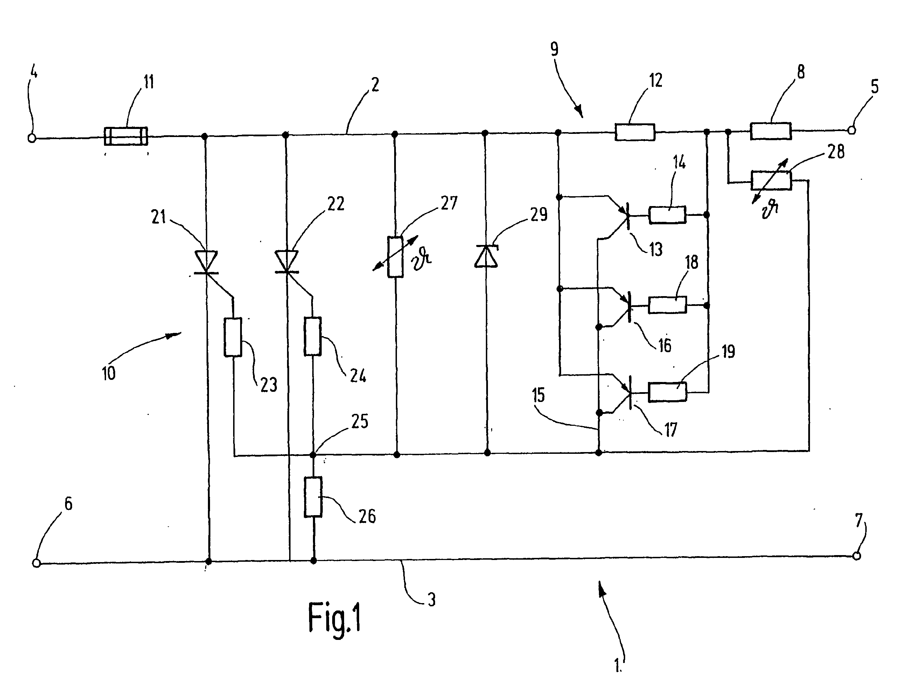

Die Schaltungsanordnung nach Figur 1 der vorliegenden Anmeldung weist zwei Längszweige auf, die in der Zuleitung zu dem entsprechenden Verbraucher liegen, wobei in einem der Längszweige der Schutzwiderstand enthalten ist. Eine mehr oder weniger schnell ansprechende Strommesseinrichtung ermittelt den Strom in einem oder beiden Längszweigen und erzeugt hieraus ein Signal, das eine steuerbare Shunteinrichtung beaufschlagt. Sobald die Shunteinrichtung aktiviert wird, erzeugt sie für eine kurze Zeit einen Querstrom, der das nichtlineare Begrenzungsglied zum Ansprechen bringt. Dieses nichtlineare Glied ist im einfachsten Falle eine Schmelzsicherung, die aufgrund des von der Shunteinrichtung hervorgerufenen Stroms durchbrennt. Es kann dabei aber auch durch einen PTC-Widerstand mit stark nichtlinearer Kennlinie handeln, der beim Überschreiten der Knicktemperatur schlagartig hochohmig wird, wobei die dann auftretende geringe Verlustleistung den Widerstand im hochohmigen Zustand hält.

Aufgrund der Strommesseinrichtung in Verbindung mit der Shunteinrichtung wird für ein rasches Abschalten oder zumindest eine starke Reduzierung des Stroms in dem Längszweig gesorgt, falls der Strom den Grenzwert stark überschreitet oder über eine längere Zeit im Grenzbereich liegt.

Dadurch wird wirksam, eine zu starke Erwärmung der Oberfläche des Schutzwiderstandes verhindert. Er kann entsprechend kleiner dimensioniert werden. Es braucht lediglich dafür gesorgt zu werden, dass die Strommesseinrichtung und die Shunteinrichtung wirksam werden, noch ehe die unzulässigen Oberflächentemperaturen des Schutzwiderstandes erreicht werden.

Zweckmäßigerweise sind sowohl die Strommesseinrichtung als auch die Shunteinrichtung redundant ausgeführt, da sie Halbleiter enthalten, die nach den Annahmen der Vorschriften zu Ausfällen neigen.

Eine sehr einfache Strommesseinrichtung besteht in der Verwendung wenigstens eines NTC-Widerstandes der thermisch fest mit dem Schutzwiderstand gekoppelt ist. Wenn der Schutzwiderstand seine Schutzwirkung entfaltet und sich zu erwärmen beginnt, wird auch der NTC-Widerstand mit erwärmt. Noch vor Erreichen von unzulässigen Oberflächentemperaturen wird der Widerstandswert des NTC-Widerstandes so klein, dass er in der Lage ist, die Shunteinrichtung auszulösen.

Eine andere Möglichkeit für die Strommesseinrichtung besteht in der Verwendung eines Stromsensorwiderstands in einem der Längszweige. Der Stromsensorwiderstand kann sehr niederohmig sein, so dass in keinem Falle eine größere Verlustleistung an ihm auftritt. Mit Hilfe des dort abgegriffenen Stromwertes wird die Steuerschaltung beaufschlagt, die hieraus das Steuersignal für die Shunteinrichtung erzeugt. Die Strommesseinrichtung kann zum Erfassen des Spannungsabfalls an dem Widerstand wenigstens einen gesteuerten Halbleiter, vorzugsweise einen Transistor aufweisen, dessen Steuerstrecke zu dem Stromsensorwiderstand parallel geschaltet ist.

Eine andere Möglichkeit besteht darin, parallel zu diesem Stromsensorwiderstand die Hauptstrecke eines Schaltkreises zu legen, der z.B. nach Art eines Parallelreglers arbeitet.

Falls die an dem Stromsensorwiderstand abfallende Spannung zu klein ist, um die Steuerung bzw. Stromversorgung für die Shunteinrichtung zu erzeugen, kann sich die Steuerspannung für die Shunteinrichtung aus dem Spannungsabfall an dem Stromsensorwiderstand und einer Konstantspannung zusammensetzen. Die Konstantspannung kann mit Hilfe einer Z-Diode oder einer vergleichbaren komplexeren Schaltung aus der Spannung zwischen den beiden Längszweigen gewonnen werden.

Im übrigen sind Weiterbildungen der Erfindung Gegenstand von Unteransprüchen. Dabei sollen auch solche Merkmalskombinationen als beansprucht angesehen werden, auf die kein ausdrückliches Ausführungsbeispiel gerichtet ist.

In der Zeichnung ist ein Ausführungsbeispiel des Gegenstandes der Erfindung dargestellt. Es zeigen:

Fig. 1    ein Ausführungsbeispiel einer Sicherheitsbarriere,

Fig. 2    ein Schaltbild einer erfindungsgemäßen mehrkanaligen Ausführung,

Fig. 3    ein Ausführungsbeispiel für die Stromüberwachungseinrichtung und

Fig. 4    eine komplexe Schaltung zum substituieren der Z-Diode, Schaltung nach Fig. 3.

Fig. 1 zeigt eine Schaltungsanordnung 1, wie sie beispielsweise in der Stromzuleitung zu einem eigensicheren Gerät liegen kann. Die Schutzschaltung 1 weist einen ersten und einen zweiten Längszweig 2, 3 auf, die jeder für sich einen ersten Eingangspunkt 4 mit einem ersten Ausgangspunkt 5 und einen zweiten Eingangspunkt 6 mit einem zweiten Ausgangspunkt 7 galvanisch verbinden. An die Ausgangspunkte 5 und 7 ist ein Verbraucher angeschlossen. In dem Längszweig 2 liegt ein Schutzwiderstand 8, der nach den Vorschriften des Explosionsschutzes für die Zündschutzart "eigensicher" erforderlich ist. Der Widerstand 8 soll den Strom in dem Längszweig 2 und damit auch in dem Längszweig 3 auf die typischen eigensicheren Werte begrenzen, sollte zwischen den Ausgangspunkten 5 und 7 ein Kurzschluss stattfinden, d.h. auf Seiten des Verbrauchers, der an den Ausgangspunkten 5 und 7 angeschlossen ist.

An dem Schutzwiderstand 8 tritt im Fehlerfall eine Verlustleistung von ca. 36 W auf, die in Wärme umgesetzt werden muss. Dabei darf die Oberflächentemperatur des Widerstands 135°C nicht überschreiten.

Diese Oberflächentemperatur wird nicht spontan erreicht, denn der Schutzwiderstand 8 weist aufgrund seiner Baugröße und der Oberfläche sowie des verwendeten Materials eine gewisse thermische Trägheit auf. Bei entsprechender mechanischer Dimensionierung des Schutzwiderstandes 8 kann dafür gesorgt werden, dass die Oberflächentemperatur ständig unterhalb des zulässigen Grenzwertes bleibt. Eine solche Dimensionierung führt aber zu einem mechanisch sehr großen Schutzwiderstand 8.

Die mechanische Größe des Schutzwiderstandes 8 kann reduziert werden, wenn es gelingt den Strom in den beiden Längszweigen 2, 3, also den Strom zu dem Verbraucher im Fehlerfall abzuschalten, noch bevor sich der Schutzwiderstand 8 unzulässig aufgeheizt hat. Zu diesem Zweck enthält die Schutzschaltung eine Strommesseinrichtung 9, die den Strom in dem Längszweig 2 und damit zum Verbraucher erfasst, sowie eine Shunteinrichtung 10, die im Zusammenwirken mit einer Schmelzsicherung 11 zum Abschalten des Stroms zu dem Verbraucher führt.

Zu der Strommesseinrichtung 9 gehört ein Stromsensorwiderstand 12, der in dem Längszweig 2 zwischen der Schmelzsicherung 11 und dem Schutzwiderstand 8 liegt. Sein Widerstandswert ist klein gegenüber dem Wert des Schutzwiderstandes 8. Die an dem Strommesswiderstand 12 abfallende Spannung wird mit Hilfe eines bipolaren Transistors 13 erfasst, dessen Emitter mit dem dem Anschlusspunkt 4 zugekehrten Ende des Widerstandes 12 verbunden ist und dessen Basis über einen Entkopplungswiderstand 14 mit der Verbindungsstelle zwischen Schutzwiderstand 8 und dem Stromsensorwiderstand 12 verbunden ist. Der Kollektor des Transistors 13 bildet einen Signalausgang 15 der Strommesseinrichtung 9. Anstelle des ohmschen Widerstand als Strommesswiderstand 12 auch ein nichtlinerarer Widerstand verwendet werden. Dieser ist kann von einer in Durchflussrichtung gepolten Diode gebildet sein, wenn im Regelfall an den Ausgangspunkten 5, 7 nur eine sehr kleiner Strom abgenommen wird.

Die Strommesseinrichtung 9 ist redundant aufgebaut, und enthält weitere bipolare Transistoren 16 und 17, deren Emitter galvanisch mit dem Emitter des Transistors 13 zusammen geschaltet sind. Die Kollektoren der Transistoren 16 und 17 liegen ebenfalls an dem Signalausgang 15. Die Basen der Transistoren 16 und 17 sind über jeweils einen eigenen Entkopplungswiderstand 18 und 19 an die Verbindungsstelle zwischen dem Stromsensorwiderstand 12 und dem Schutzwiderstand 8 angeschaltet.

Die Shunteinrichtung 10 ist ebenfalls redundant ausgeführt und enthält zwei parallel geschaltete Thyristoren 21 und 22, deren Anoden wie gezeigt mit dem Längszweig 2 und deren Kathoden mit dem Längszweig 3 verbunden sind. Über jeweils einen eigenen Entkopplungswiderstand 23 und 24 sind die Steuerelektroden der Thyristoren 21 und 22 an den Signalausgang 15 angeschlossen. Die Verbindungsstelle zwischen den kalten Enden der beiden Widerstände 23 und 24 bildet gleichsam einen Steuereingang 25 der Shunteinrichtung 11.

Zum Ableiten von unvermeidbaren Leckströmen ist schließlich ein Ableitwiderstand 26 vorgesehen, der den Steuereingang 25 hochohmig mit dem Längszweig 3 verbindet.

Zur Erhöhung der Sicherheit der gesamten Anordnung ist ein NTC-Widerstand 27 vorhanden, der den Steuereingang 25 mit dem Längszweig 2 verbindet. Ein weiterer NTC-Widerstand 28, der zu dem NTC-Widerstand 27 parallelgeschaltet ist, ist mit dem Schutzwiderstand 8 thermisch eng gekoppelt und misst unmittelbar dessen Oberflächentemperatur, während der NTC-Widerstand 27 die Umgebungstemperatur erfasst.

Schließlich ist noch eine Z-Diode 29 vorhanden, die zwischen dem Längszweig 2 und dem Steuereingang 25 liegt und dafür sorgt, dass die Spannung zwischen den Längszweigen 2 und 3 eine vorgegebene Grenze nicht überschreiten kann.

Aufgrund ihrer Arbeitsweise sind die Signale, die die Strommesseinrichtung 9, die NTC-Widerstände 27 und 28 und die Z-Diode 29 liefern, an dem Steuereingang 25 ODER-verknüpft, d.h. zum Auslösen der Shunteinrichtung 10 genügt es, wenn eines der Signale eine zulässige Grenze überschreitet.

Zur Erläuterung der Funktionsweise sein angenommen, dass an die Eingangspunkte 4 und 6 eine Stromquelle angeschlossen ist, während die Ausgangspunkte 5 und 7 mit einem beliebigen Verbraucher verbunden sind. Aus der Sicht der Anschlusspunkte 4 und 6 soll die Anordnung eigensicher im Sinne der Vorschriften des Explosionsschutzes sein.

Solange auf der Verbraucherseite kein Kurzschluss auftritt, fließt der Strom über die beiden Längszweige 2 und 3 zum Verbraucher bzw. von diesem zurück. Dabei entsteht ein geringerer Spannungsabfall an dem Strommesswiderstand 12 und an dem Schutzwiderstand 8. Der Spannungsabfall an dem Schutzwiderstand 8 ist im Normalbetrieb zu klein, als dass dort eine nennenswerte Verlustleistung auftritt, die zu einer unzulässigen Erwärmung führen würde.

Der Spannungsabfall an dem Stromsensorwiderstand 12 ist kleiner als es der Schwellspannung des PN-Übergangs der Transistoren 13, 16 und 17 entspricht. Diese Transistoren 13, 16, 17 bleiben gesperrt.

Die Spannung zwischen den beiden Längszweigen 2 und 3 ist kleiner als die Z-Spannung 29, so dass dies ebenfalls gesperrt bleibt. Die Temperaturen sind niedrig, womit die NTC-Widerstände 27 und 28 jeder für sich hochohmig bleiben. In der Folge tritt auch kein Strom in dem Ableitwiderstand 26 auf, der zu einem Spannungsabfall führt, der über der Zündspannung der Thyristoren 21 oder 22 liegen würde.

Wenn in dem Verbraucher ein Kurzschluss auftritt, der zu einem großen Strom in dem Längszweig 2 führt, setzt die Begrenzungswirkung durch den Schutzwiderstand 8 ein. Gleichzeitig erhöht sich der Spannungsabfall an dem Strommesswiderstand 12. Der Spannungsabfall erreicht Werte, die zumindest einen der Transistoren 13, 16 und 17 leitend werden lassen. Dadurch werden die Transistoren niederohmig und das Potential an dem Steuereingang 25 verschiebt sich bis auf den Wert auf dem Längszweig 2 abzüglich der Sättigungsspannung der Transistoren 13, 16 und 17. In jedem Fall reicht die Spannung aus, um über die Schutzwiderstände 23 und 24 die Thyristoren 21 und 22 zu triggern. Da die Thyristoren 21 und 22 unmittelbar auf der kalten Seite der Schmelzsicherung 11 angeschlossen sind, entsteht durch die Schmelzsicherung 11 ein Strom, der die Schmelzsicherung 11 unmittelbar zum Durchbrennen bringt. Damit wird innerhalb kurzer Zeit der Verbraucher stromlos.

Die beiden Widerstände 8 und 12 liegen jenseits des Stromkreises, der durch die Schmelzsicherung 11 und die Thyristoren 21 und 22 gebildet wird. Damit haben diese beiden Widerstände 8 und 12 keinen Einfluss auf den Strom, der durch die Thyristoren 21, 22 sowie die Schmelzsicherung 11 fließt.

Die Strommesseinrichtung 9 spricht sehr schnell an und ist somit im Zusammenwirken mit den Thyristoren 21 und 22 in der Lage, innerhalb sehr kurzer Zeit nach dem Auftreten des Grenzstromes den Strompfad vollständig abzuschalten.

Die Transistoren 13, 16 und 17 sind sowohl eingangsseitig als auch ausgangsseitig zueinander parallel geschaltet, wodurch sich die oben erwähnte Redundanz ergibt. Sollte einer der Transistoren nicht mehr in den leitenden Zustand gesteuert werden können, weil eine Unterbrechung vorliegt, können die übrigen noch funktionsfähigen Transistoren den notwendigen Strom zum Zünden der Thyristoren 21, 22 erzeugen.

Die Widerstände 14, 18 und 19 sollen eine Rückwirkung auf die Funktionsfähigkeit der übrigen Transistoren 13, 16, 17 verhindern, falls an einem der Transistoren 13, 16, 17 die Basis-Emitters-Strecke durchlegiert. Ohne den Entkopplungswiderstand 14, 18 oder 19 würde dieser Fehler zu einer Überbrückung des Stromsensorwiderstandes 12 führen. Auch die funktionsfähigen Transistoren würden kein Steuersignal mehr bekommen.

Sollte bei der gezeigten Schaltungsanordnung 1 keine der Transistoren 13, 16 oder 17 ansprechen, bspw. weil der Stromsensorwiderstand 12 fehlerhaft ist, tritt eine Erwärmung des Schutzwiderstandes 8 auf. Die Temperatur des Schutzwiderstandes 8 wird über den thermisch fest gekoppelten NTC-Widerstand 28 gemessen. In einem ausreichenden Abstand unterhalb der unzulässigen Oberflächentemperatur verringert sich der Widerstandswert des NTC-Widerstandes 28 auf einen Wert, der einen Strom erzeugt, um die Thyristoren 21, 22 zu triggern.

Mit Hilfe des NTC-Widerstandes 28 können auch Fehlerzustände erfasst werden, bei denen wegen einer sehr kleinen Dimensionierung des Schutzwiderstandes 8 bereits dann unzulässige Oberflächentemperaturen erreicht werden könnten, bevor der Spannungsabfall an dem Stromsensorwiderstand 12 ausreicht, um einen oder mehrere der Transistoren 13, 16, oder 17 durch zusteuern. Der NTC-Widerstand 28 würde somit auf eine geringfügige lang andauernde Überlastung ansprechen, während der Stromsensoreinrichtung 9 schnell auf eine sehr große Überlastung reagiert.

Der NTC-Widerstand 27 überwacht die allgemeine Umgebungstemperatur und sorgt für ein Abschalten, falls die Umgebungstemperatur soweit angestiegen ist, dass keine ordnungsgemäße Kühlung der Bauelemente mehr gewährleistet ist.

Die Z-Diode 29 überwacht die Spannung zwischen den beiden Längszweigen 2 und 3. Sobald die Spannung ein unzulässiges Maß überschreitet, wird die Z-Diode 29 leitend und liefert einen Zündstrom für die beiden Thyristoren 21 und 22.

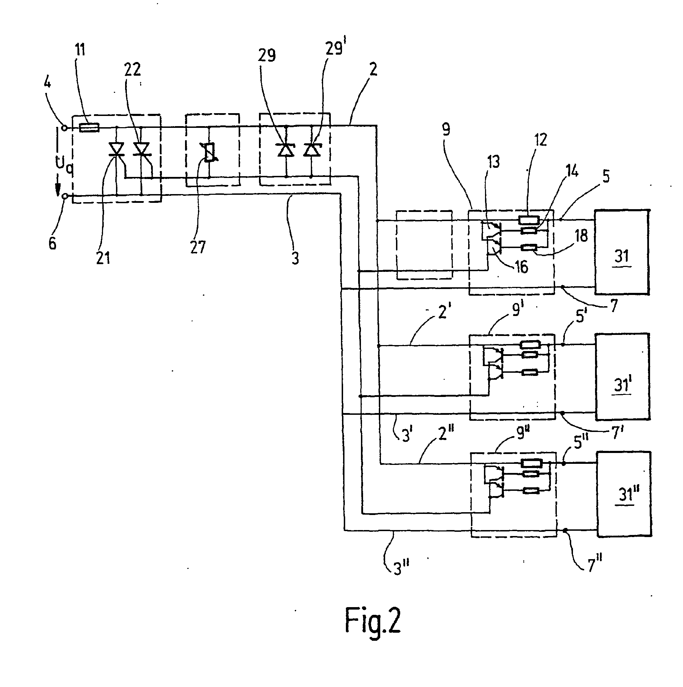

Die in Fig. 1 gezeigte Schaltungsanordnung eignet sich nicht nur als Bestandteil von eigensicheren Schaltgeräten, sondern auch als Schaltung für eine Sicherheitsbarriere. Darüber hinaus kann auf der Basis dieser Grundschaltung eine mehrkanalige Sicherheitsbarriere aufgebaut werden, wie sie in Fig. 2 schematisch gezeigt ist.

Der Unterschied der Schaltungsanordnung gemäß Fig. 2 und der Anordnung nach Fig. 1 betrifft zunächst einmal den Wegfall des Schutzwiderstandes 8. Die Begrenzung auf die nach der Vorschrift der Eigensicherheit erforderlichen Stromwerte geschieht ausschließlich mit Hilfe der Stromüberwachungseinrichtung 9 in Verbindung mit dem Stromsensorwiderstand 12. Im übrigen enthält die Schaltung nach Fig. 2 vollständig die Schaltung nach Fig. 1, weshalb für die sich wiederholenden Bauelemente die selben Bezugszeichen verwendet werden. Die Änderung der Schaltung in Richtung auf eine mehrkanalige Sicherheitsbarriere besteht in dem Anschluss von zusätzlichen Zweigleitungen 2' und 2" bzw. 3' und 3", die von den beiden Längszweigen 2 und 3 abzweigen. Die Abzweigstelle liegt elektrisch gesehen auf der kalten Seite hinter der Z-Diode 29. Die Z-Diode ist im Falle der Anordnung nach Fig. 2 ebenfalls redundant angeordnet, d.h. es gibt eine weitere Z-Diode 29'.

Da die Abzweigleitungen 2' ... 3" zwischen der Strommesseinrichtung 9 und der Z-Diode 29 abzweigen, sind die Überwachungsfunktionen durch die Z-Diode 29 und 29' den NTC-Widerstand 27 sowie die Shunteinrichtung 10 für alle rechts davon liegenden Schaltungsteilen gemeinsam. Die Abzweigleitungen 2'... 3" sind sozusagen, die in Richtung Verbraucher führenden Verlängerungen der Längszweige 2 und 3 bis zu der Z-Diode 29.

Zwischen den Abzweigleitungen 2' ... 3" liegen jeweils eigene Strommesseinrichtung 9' und 9", die in der gleichen Weise ausgebildet sind, wie die Stromüberwachungseinrichtung 9, deren Funktion in Verbindung mit Fig. 1 oben ausführlich erläutert ist.

Da sich die Überwachungseinrichtung 9 an ihrem Ausgang 15 wie eine Open-Kollektorschaltung verhält, kann sie mit weiteren gleichartig aufgebauten Schaltungen zusammen an den Steuereingang 25 angeschlossen werden, wobei die oben erwähnte ODER-Verknüpfung zustande kommt. Damit wird für jeden Kanal der in Fig. 2 gezeigten Schaltungsanordnung der Strom zu einem Verbraucher, wie sie bei 31, 31' 31" angedeutet sind, individuell überwacht. Sollte bei einem Verbrauch der Strom infolge eines Fehlers in Bereiche kommen, die größer sind als das, was nach den Explosionsschutzvorschriften für die Zündschutzart eigensicher zulässig ist, werden in der betroffenen Strommesseinrichtung 9 enthaltenen Transistoren 13, 16 leitend und triggern die für alle Kanäle gemeinsamen Thyrsitoren 21 und 22. Dadurch werden sämtliche an der mehrkanaligen Sicherheitsbarriere angeschlossenen Verbraucher, also auch die fehlerfrei arbeitenden mit abgeschaltet.

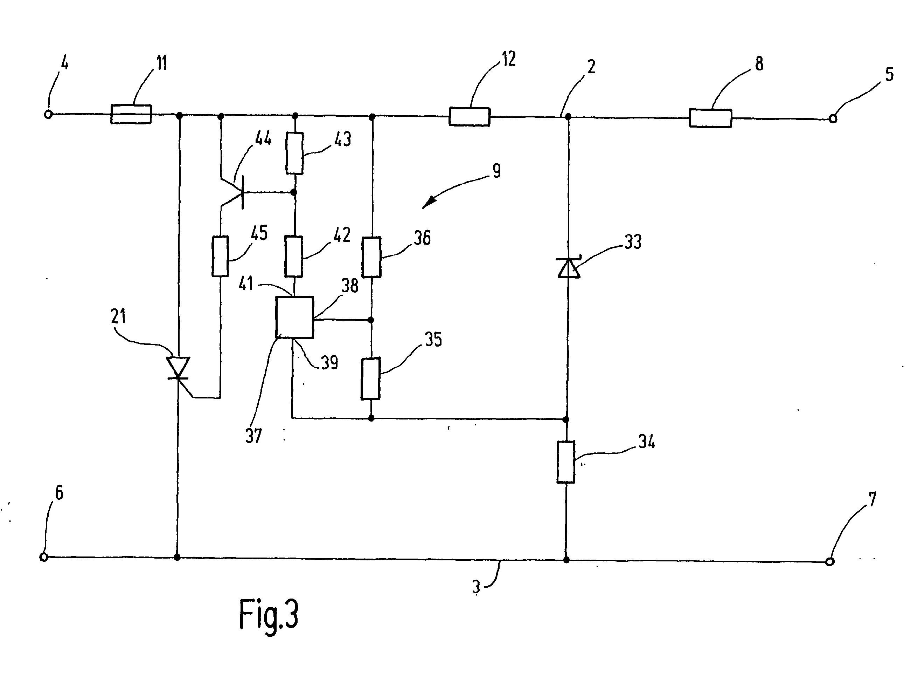

Fig. 3 zeigt das Prinzipschaltbild für eine Anordnung die eine genauere Schaltschwelle aufweist. Die Schaltschwelle, bei der die Shunteinrichtung 10 nach Fig. 1 ausgelöst wird, hängt von den Bauteiletoleranzen der Transistoren 13, 16 und 17 ab. Obendrein ist die Kennlinie relativ weich, weil die Verstärkung verhältnismäßig gering ist. Eine höhere Schaltgenauigkeit lässt sich erzielen, wenn die Spannung an dem Stromsensorwiderstand 12 nicht einfach mit Hilfe eines einzelnen Transistors erfasst wird sondern mit Hilfe einer integrierten Schaltung, die die Charakteristik einer Z-Diode aufweist.

Eine hierfür geeignete integrierte Schaltung ist unter der Typenbezeichnung TL-431 von der Fa. Motorola erhältlich.

Von der Verbindungsstelle zwischen dem Stromsensorwiderstand 12 und dem Schutzwiderstand 8 führt eine Serienschaltung aus einer Z-Diode 33 und einem Begrenzungswiderstand 34 zu dem anderen Längszweig 3. Parallel zu der Serienschaltung zu der Z-Diode 33 und dem Stromsensorwiderstand 12 liegt ein ohmscher Spannungsteiler aus zwei Widerständen 35 und 36. Parallel zu dem Widerstand 35 liegt die Steuerstrecke einer integrierten Schaltung 37 mit hoher Verstärkung und scharfem Knick in der Kennlinie. Ihr Steuereingang 38 ist an die Verbindungsstelle zwischen dem Widerstand 35 und dem Widerstand 36 angeschlossen, während der gemeinsame Fußpunkt 39 an dem Widerstand 34 angeschaltet ist.

Ein dritter Anschluss 41 ist über die Serienschaltung von zwei Widerständen 42 und 43 mit dem Längszweig 2 zwischen der Sicherung 11 und dem Stromsensorwiderstand 12 verbunden. Die integrierte Schaltung 37 verhält sich zwischen den beiden Anschlüssen 39 und 41 wie ein Schwellwertschalter. Unterhalb eines vorgegebenen Schwellwertes ist die Strecke zwischen den Anschlüssen 41 und 39 hochohmig. Es fließt durch die Widerstände 42 und 43 kein Strom.

Zur Leistungsverstärkung dient ein bipolarer Transistor 44, dessen Emitter an dem Längszweig 2 liegt und zwar ebenfalls zwischen der Schmelzsicherung 11 und dem Stromsensorwiderstand 12. Die Basis ist mit der Verbindungsstelle zwischen den Widerständen 42 und 43 verbunden, während der Kollektor über einen Entkopplungs- und Schutzwiderstand 45 an der Zündelektrode des Thyristors 21 liegt.

Die Schaltungsanordnung nach Fig. 3 arbeitet folgendermaßen:

Die Betriebsspannung für die integrierte Schaltung 37, die die Charakteristik eines Schwellwertschalters aufweist, wird mit Hilfe der Z-Diode 33 erzeugt, zu der der Spannungsabfall an dem Stromsensorwiderstand 12 hinzukommt.

Der Spannungsabfall an dem Stromsensorwiderstand 12 ändert sich in Abhängigkeit von dem Strom zu dem Verbraucher, der an die Ausgangspunkte 5 und 7 angeschlossen zu denken ist. Solange der Strom zu dem Verbraucher unterhalb gefährlicher Werte bleibt, ist die Summe aus dem Spannungsabfall an dem Stromsensorwiderstand 12 und der Z-Diode 33 zu klein, als dass über den Spannungsteiler aus den Widerständen 35 und 36 an dem Eingang 38 eine Spannung erzeugt würde, die größer als diejenige Spannung ist, die erforderlich ist, um die integrierte Schaltung 37 zwischen den Anschlüssen 39 und 41 in den leitenden Zustand umzusteuern. Dadurch bleibt der Spannungsteil aus den Widerständen 42 und 43 stromlos und der Transistor 44 gesperrt.

Wenn der Strom durch den Stromsensorwiderstand 12 ansteigt, vergrößert sich entsprechend die Summe aus dieser Spannung und dem Spannungsabfall an der Z-Diode 33. Beim Erreichen eines bestimmten Wertes steigt demzufolge auch die Spannung an dem Widerstand 35 über den Referenzwert, ab dem die integrierte Schaltung 37 leitend wird. Dieses Umschalten erfolgt wegen der hohen inneren Verstärkung der integrierten Schaltung 37 mit einem scharfen Knick, so dass entsprechend abrupt der Strom durch die Widerstände 43 und 42 eingeschaltet wird, mit der Folge, dass auch der Transistor 44 aufgesteuert wird. Er liefert über seine Basis-Emitter-Strecke sodann den Zündstrom für den Thyristor 21.

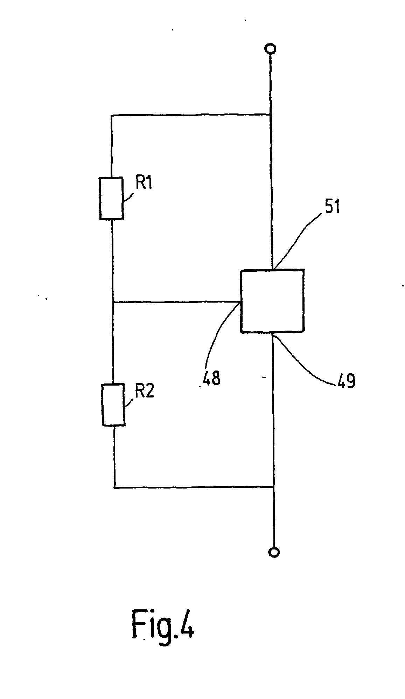

Falls die etwas weiche Kennlinie der Z-Diode 33 stört oder ihr Temperaturgang, kann als Z-Diodenersatz auch die Schaltung nach Fig. 4 verwendet werden. Es handelt sich hierbei wiederum um die integrierte Schaltung ZHT-431 die mit zwei Widerständen R1 und R2 parallel geschaltet ist. R2 liegt zwischen dem Steuereingang 48 und einem Masseanschluss 49, der gleichzeitig der Anode der nachgebildeten Z-Diode entspricht. Der zweite Leistungseingang 51 ist über den Widerstand R1 ebenfalls mit dem Steuereingang 48 verbunden. Der Leistungsanschluss 51 entspricht der Kathode eine Z-Diode.

Die Spannung zwischen den beiden Anschlüssen 51 und 49 genügt folgender Gleichung:

$$V_z = (1 + R1/R2) \times V_{ref}$$

Eine Schaltungsanordnung weist eine Strommess- oder Temperaturmesseinrichtung auf, die dazu verwendet wird, eine Shunteinrichtung zu triggern. Die Shunteinrichtung erzeugt einen Kurzschluss, der unmittelbar zum Durchbrennen einer Schmelzsicherung führt.

Die Anordnung ist modular und gestattet mehrere Strommesseinrichtungen an einer gemeinsamen Shunteinrichtung zu betreiben. Speziell ist die Anordnung dazu vorgesehen zu verhindern, dass sich ein Schutzwiderstand im Fehlerfalle auf zu hohe Oberflächentemperaturen erwärmt, weil der Strom über eine zulange Zeit fließt.

**Patentansprüche**

1. Schaltungsanordnung zur Strombegrenzung in einer Zuleitung zu einem Stromverbraucher (31), mit einem ersten Längszweig (2,3), der einen ersten Eingangspunkt (4, 6) mit einem ersten Ausgangpunkt (5, 7) galvanisch verbindet, mit einem zweiten Längszweig (2, 3), der einen zweiten Eingangspunkt (4,6) mit einem zweiten Ausgangpunkt (5, 7) galvanisch verbindet, mit einer Strommesseinrichtung (9), die den Strom in wenigstens einem der Längszweige (2, 3) erfasst und die wenigstens einen Signalausgang (15) aufweist,

mit einer steuerbaren Shunteinrichtung (10), die auf der dem Eingangspunkt (4, 6) benachbarten Seite der Strommesseinrichtung (9) angeschlossen ist und die einen Steuereingang (25) aufweist, der an den Signalausgang (15) der Strommesseinrichtung (9) angeschlossen ist, und

mit einem nichtlinearen Glied (11), das zwischen einem der Eingangspunkte (4, 6) und der Shunteinrichtung (10) liegt und das unterhalb eines Stromgrenzwertes niederohmig und bei Überschreiten des Stromgrenzwertes anspricht und hochohmig wird, wobei die Shunteinrichtung (10) im aktivierten Zustand für kurze Zeit einen Querstrom erzeugt, der das nichtlineare Glied (11) zum Ansprechen bringt, wobei von dem ersten und dem zweiten Längszweig (2, 3) wenigstens ein dritter und ein vierter Längszweig (2'..3" abzweigen, wobei die Abzweigstelle des dritten und vierten Längszweigs (2', 3") auf jener Seite der Shunteinrichtung (10) liegt, die den Ausgangspunkten (5, 7) benachbart ist,

und wobei der dritte und der vierte Längszweig (2'.. 3") mit einer eigenen Strommesseinrichtung (9', 9") versehen ist, deren Signalausgang (15) mit dem Steuereingang (25) der Shunteinrichtung (10) verbunden ist, derart dass sämtliche Strommesseinrichtungen (9) ausgangsseitig parallel geschaltet sind.

2.  Schaltungsanordnung nach Anspruch 1, **dadurch gekennzeichnet, dass** die Strommesseinrichtung (9) redundant ausgeführt ist.

3.  Schaltungsanordnung nach Anspruch 2, **dadurch gekennzeichnet, dass** eine Temperaturmesseinrichtung (28, 27), vorzugsweise in Gestalt eines NTC-Widerstands, vorgesehen ist, der einen der Längszweige (2, 3) mit dem Steuereingang (25) verbindet.

4.  Schaltungsanordnung nach Anspruch 1, **dadurch gekennzeichnet, dass** die Strommesseinrichtung (9) einen in einem der Längszweige (2, 3) liegenden Strommesswiderstand (12) umfasst, der von einem linearen oder einem nichtlinearen Widerstand gebildet ist.

5.  Schaltungsanordnung nach Anspruch 4, **dadurch gekennzeichnet, dass** mittels einer vorzugsweise redundanten Auswerteschaltung (13, 16, 17, 37) der Spannungsabfall an dem Strommesswiderstand (8) überwacht wird und dass die Auswerteschaltung (13, 16, 17, 37) einen Signalausgang (15) aufweist, der den Signalausgang (25) der Strommesseinrichtung (9) bildet.

6.  Schaltungsanordnung nach Anspruch 4, **dadurch gekennzeichnet, dass** die Strommesseinrichtung (9) wenigstens einen Transistor (13, 16, 17) aufweist, dessen Steuerstrecke parallel zu dem Strommesswiderstand (12) liegt, und dass eine Hauptelektrode des Transistors (13, 16, 17) den Signalausgang (15) bildet.

7.  Schaltungsanordnung nach Anspruch 1, **dadurch gekennzeichnet, dass** eine Spannungsüberwachungseinrichtung (29) vorgesehen ist, die die Spannungsdifferenz zwischen den beiden Längszweigen (2, 3) erfasst und die einen Signalausgang aufweist, der an den Steuereingang (25) der Shunteinrichtung (10) angeschlossen ist.

8.  Schaltungsanordnung nach Anspruch 7, **dadurch gekennzeichnet, dass** die Spannungsüberwachungsschaltung (29) redundant ausgeführt ist.

9.  Schaltungsanordnung nach Anspruch 8, **dadurch gekennzeichnet, dass** die Spannungsüberwachungseinrichtung (29) von wenigstens einer Z-Diode gebildet ist, über die einer der Längszweige (2, 3) mit dem Steuereingang (25) verbunden ist.

10. Schaltungsanordnung nach Anspruch 1, **dadurch gekennzeichnet, dass** die Shunteinrichtung (10) redundant ausgeführt ist.

11. Schaltungsanordnung nach Anspruch 1, **dadurch gekennzeichnet, dass** die Shunteinrichtung (10) wenigstens einen gesteuerten Halbleiter (21, 22) aufweist, dessen Steuereingang mit dem Steuereingang (25) der Shunteinrichtung (10) verbunden ist.

12. Schaltungsanordnung nach Anspruch 1, **dadurch gekennzeichnet, dass** der gesteuerte Halbleiter (21, 22) von einem Thyristor, einem Triac oder einem Transistor gebildet ist.

13. Schaltungsanordnung nach Anspruch 1, **dadurch gekennzeichnet, dass** die Shunteinrichtung (10) an ihrem Steuereingang eine Schutzschaltung (23, 24) aufweist.

14. Schaltungsanordnung nach Anspruch 13, **dadurch gekennzeichnet, dass** die Schutzschaltung (23, 24) von ohmschen Widerständen gebildet ist.

15. Schaltungsanordnung nach Anspruch 1, **dadurch gekennzeichnet, dass** das nichtlineare Glied von einer Schmelzsicherung (11) gebildet ist.

16. Schaltungsanordnung nach Anspruch 1, **dadurch gekennzeichnet, dass** die Strommesseinrichtungen (9) einen Schwellwertschalter (37) enthält, der vorzugsweise hysteresefrei ist.

17. Schaltungsanordnung nach Anspruch 1, **dadurch**

**gekennzeichnet, dass** die Shunteinrichtung (10) von der bzw. den Strommesseinrichtungen (9) räumlich abgesetzt angeordnet ist.

## Claims

1.  Circuit arrangement for limiting current in a supply line to an electric load (31),
    with a first series arm (2, 3), which electrically connects a first input point (4, 6) to a first output point (5, 7),
    with a second series arm (2, 3), which electrically connects a second input point (4, 6) to a second output point (5, 7),
    with a current measuring device (9), which detects the current in at least one of the series arms (2, 3) and which has at least one signal output (15),
    with a controllable shunt device (10), which is connected on the side of the current measuring device (9) adjacent to the input point (4, 6) and which has a control input (25), which is connected to the signal output (15) of the current measuring device (9), and
    with a non-linear element (11), which lies between one of the input points (4, 6) and the shunt device (10) and which responds with low resistance below a current limit value and becomes high-resistance when the current limit value is exceeded, wherein in the activated state the shunt device (10) generates a transverse current for a short time that causes the non-linear element (11) to respond,
    wherein at least a third and a fourth series arm (2' .. 3") branch off from the first and the second series arms (2, 3), wherein the branch point of the third and fourth series arm (2', 3") lies on the side of the shunt device (10) that is adjacent to the output points (5, 7), and wherein the third and the fourth series arm (2'... 3") is provided with its own current measuring device (9', 9"), the signal output (15) of which is connected to the control input (25) of the shunt device (10) in such a manner that all the current measuring devices (9) are connected in parallel on the output side.

2.  Circuit arrangement according to claim 1, **characterised in that** the current measuring device (9) is redundant in design.

3.  Circuit arrangement according to claim 2, **characterised in that** a temperature measuring device (28, 27), preferably in the form of an NTC thermistor, is provided, which connects one of the series arms (2, 3) to the control input (25).

4.  Circuit arrangement according to claim 1, **characterised in that** the current measuring device (9) comprises a current measuring resistor (12), which lies in one of the series arms (2, 3) and is formed by a linear or a non-linear resistor.

5.  Circuit arrangement according to claim 4, **characterised in that** the voltage drop at the current measuring resistor (8) is monitored by means of a preferably redundant evaluation circuit (13, 16, 17, 37), and that the evaluation circuit (13, 16, 17, 37) has a signal output (15), which forms the signal output (25) of the current measuring resistor (9).

6.  Circuit arrangement according to claim 4, **characterised in that** the current measuring device (9) has at least one transistor (13, 16, 17), the control section of which lies parallel to the current measuring resistor (12), and that a main electrode of the transistor (13, 16, 17) forms the signal output (15).

7.  Circuit arrangement according to claim 1, **characterised in that** a voltage monitoring device (29) is provided, which detects the voltage difference between the two series arms (2, 3) and which has a signal output, which is connected to the control input (25) of the shunt device (10).

8.  Circuit arrangement according to claim 7, **characterised in that** the voltage monitoring circuit (29) is redundant in design.

9.  Circuit arrangement according to claim 8, **characterised in that** the voltage monitoring device (29) is formed by at least one Z diode, by means of which one of the series arms (2, 3) is connected to the control input (25).

10. Circuit arrangement according to claim 1, **characterised in that** the shunt device (10) is redundant in design.

11. Circuit arrangement according to claim 1, **characterised in that** the shunt device (10) has at least one controlled semiconductor (21, 22), the control input of which is connected to the control input (25) of the shunt device (10).

12. Circuit arrangement according to claim 1, **characterised in that** the controlled semiconductor (21, 22) is formed by a thyristor, a triac or a transistor.

13. Circuit arrangement according to claim 1, **characterised in that** the shunt device (10) has a protective circuit (23, 24) at its control input.

14. Circuit arrangement according to claim 13, **characterised in that** the protective circuit (23, 24) is formed by ohmic resistors.

15. Circuit arrangement according to claim 1, **characterised in that** the non-linear element is formed by a fuse (11).

16. Circuit arrangement according to claim 1, **characterised in that** the current measuring devices (9) contain a threshold switch (37), which is preferably hysteresis-free.

17. Circuit arrangement according to claim 1, **characterised in that** the shunt device (10) is arranged to be spatially set back from the current measuring device or devices (9).

## Revendications

1. Circuit de limitation de courant dans une ligne d'alimentation d'un consommateur de courant (31), avec une première branche longitudinale (2, 3) qui relie galvaniquement un premier point d'entrée (4, 6) à un premier point de sortie (5, 7), avec une deuxième branche longitudinale (2, 3) qui relie galvaniquement un deuxième point d'entrée (4, 6) à un deuxième point de sortie (5, 7), avec un dispositif de mesure de courant (9) qui détecte le courant dans au moins une des branches longitudinales (2, 3) et qui présente au moins une sortie de signal (15), avec un dispositif de shuntage commandable (10) qui est raccordé du côté du dispositif de mesure de courant (9) voisin du point d'entrée (4, 6) et qui présente une entrée de commande (25) qui est raccordée à la sortie de signal (15) du dispositif de mesure de courant (9), et avec un élément non linéaire (11) qui est situé entre un des points d'entrée (4, 6) et le dispositif de shuntage (10) et qui, au-dessous d'une valeur limite de courant, est à basse impédance et, en cas de dépassement de la valeur limite de courant, réagit et passe à haute impédance, le dispositif de shuntage (10) générant, dans l'état activé, pendant un temps bref, un courant transversal qui fait réagir l'élément non linéaire (11), au moins une troisième et une quatrième branches longitudinales (2'.. 3") dérivant de la première et de la deuxième branches longitudinales (2, 3), le point de dérivation de la troisième et de la quatrième branches longitudinales (2', 3") étant situé du côté du dispositif de shuntage (10) qui est voisin des points de sortie (5, 7), et la troisième et la quatrième branches longitudinales (2'.. 3") étant pourvues de leur propre dispositif de mesure de courant (9', 9") dont la sortie de signal (15) est reliée à l'entrée de commande (25) du dispositif de shuntage (10), de façon que tous les dispositifs de mesure de courant (9) soient branchés en parallèle côté sortie.

2. Circuit selon la revendication 1, **caractérisé en ce que** le dispositif de mesure de courant (9) est réalisé de manière redondante.

3. Circuit selon la revendication 2, **caractérisé en ce qu'**il est prévu un dispositif de mesure de température (28, 27), de préférence sous la forme d'une résistance CTN, qui relie une des branches longitudinales (2, 3) à l'entrée de commande (25).

4. Circuit selon la revendication 1, **caractérisé en ce que** le dispositif de mesure de courant (9) comprend une résistance de mesure de courant (12) qui est située dans une des branches longitudinales (2, 3) et qui est formée par une résistance linéaire ou non linéaire.

5. Circuit selon la revendication 4, **caractérisé en ce que** la chute de tension à la résistance de mesure de courant (8) est surveillée au moyen d'un circuit d'évaluation (13, 16, 17, 37) de préférence redondant et **en ce que** le circuit d'évaluation (13, 16, 17, 37) présente une sortie de signal (15) qui forme la sortie de signal (25) du dispositif de mesure de courant (9).

6. Circuit selon la revendication 4, **caractérisé en ce que** le dispositif de mesure de courant (9) comporte au moins un transistor (13, 16, 17) dont la ligne de commande est montée en parallèle sur la résistance de mesure de courant (12) et **en ce qu'**une électrode principale du transistor (13, 16, 17) forme la sortie de signal (15).

7. Circuit selon la revendication 1, **caractérisé en ce qu'**il est prévu un dispositif de surveillance de tension (29) qui détecte la différence de tension entre les deux branches longitudinales (2, 3) et qui présente une sortie de signal qui est raccordée à l'entrée de commande (25) du dispositif de shuntage (10).

8. Circuit selon la revendication 7, **caractérisé en ce que** le dispositif de surveillance de tension (29) est réalisé de manière redondante.

9. Circuit selon la revendication 8, **caractérisé en ce que** le dispositif de surveillance de tension (29) est formé par au moins une diode Z par laquelle une des branches longitudinales (2, 3) est reliée à l'entrée de commande (25).

10. Circuit selon la revendication 1, **caractérisé en ce que** le dispositif de shuntage (10) est réalisé de manière redondante.

11. Circuit selon la revendication 1, **caractérisé en ce que** le dispositif de shuntage (10) comporte au moins un semi-conducteur commandé (21, 22) dont l'entrée de commande est reliée à l'entrée de commande (25) du dispositif de shuntage (10).

12. Circuit selon la revendication 1, **caractérisé en ce**

**que** le semi-conducteur commandé (21, 22) est formé par un thyristor, un triac ou un transistor.

13. Circuit selon la revendication 1, **caractérisé en ce que** le dispositif de shuntage (10) comporte un circuit de protection (23, 24) à son entrée de commande.

14. Circuit selon la revendication 13, **caractérisé en ce que** le circuit de protection (23, 24) est formé par des résistances ohmiques.

15. Circuit selon la revendication 1, **caractérisé en ce que** l'élément non linéaire est formé par un fusible (11).

16. Circuit selon la revendication 1, **caractérisé en ce que** le dispositif de mesure de courant (9) contient un commutateur à valeur seuil (37) qui est de préférence sans hystérésis.

17. Circuit selon la revendication 1, **caractérisé en ce que** le dispositif de shuntage (10) est disposé spatialement à l'écart du ou des dispositif(s) de mesure de courant (9).

Fig.1

Fig.2

Fig.3

R1

51

48

R2

49

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5144517 A